# EUROPEAN PATENT APPLICATION

(11) **EP 1 587 110 A1**
(43) Date of publication of application: **19.10.2005**
(21) Application number: 04009092.0
(22) Date of filing: 16.04.2004
(51) Int. Cl.: G11B 27/034

(54) **System and method for converting DVD based video recording formats among each other**

(71) Applicant: Nero AG, 76307 Karlsbad (DE)
(72) Inventor: Eckleder, Andreas, 76307 Karlsbad (DE)
(74) Representative: Lindner, Michael

(57) **Abstract**

The present invention relates to a method and a system for converting DVD based video recording formats among each other. The system comprises a reader unit for reading source data organized in any DVD-source format from a DVD-source medium; a writer unit for writing destination data organized in any DVD-destination format on a DVD-destination medium; and a processing unit coupled with the reader unit for receiving data from the source medium and coupled with said writer unit for supplying data to be written. Said processing unit is adapted to convert DVD-source data in any DVD-source format into DVD-destination data in any DVD-destination format. The inventive method comprises the steps of analysing source data on a DVD-source medium for determining the DVD-source format; generating destination data organized in said desired DVD-destination format by using selected source data on the basis of the result of the analysing step; and writing said destination data on a DVD-destination medium.

## Description

### BACKGROUND OF THE INVENTION

The present invention relates to a system for converting DVD based video recording formats among each other. The invention also relates to a method for converting any video recording source format of data stored on a DVD-source medium into a desired video recording destination format.

In the past, videos has been recorded generally on magnetic tapes using a standardized video format, for example the VHS-video format. Recently, DVD-recorders become more and more popular not only in computer equipment but also in the field of home entertainment products. It is to be expected that DVD recorders will take over the role of magnetic tape video recorder. This change will be accelerated by the plurality of functions offered by up to date DVD-recorders. Particularly, the user is allowed to easily add additional information and menus to the normal video recordings.

However, the user of DVD-recorders is confronted with a plurality of different DVD-video recording formats which are not compatible among each other. That is, it may happen that a DVD produced by use of a computer based DVD-recorder may not be played on a stand-alone DVD video player.

Moreover, conventional approaches allow only to convert from DVD-video recording format to the same DVD-video recording format not to others.

Since it may not be expected that the industry will agree to one common DVD-recording format, there is a general demand for a system being able to process every DVD-format.

In addition, the system should be so designed that it easily allows incorporating new DVD video recording formats.

### SUMMARY OF THE INVENTION

In view of the above it is an object of the present invention to provide a system and a method which overcome the problems caused by different DVD-formats.

It is a further object of the present invention to provide a system and a method for converting DVD based video recording formats among each other which are designed less complex and allow to incorporate new DVD video recording formats.

A further object is to make remastering unnecessary by incorporating all information available on the original DVD medium to create the DVD layout of the destination DVD.

Another object of the present invention is to avoid further use of the temporary storage space other than a data processing applications RAM while copying data from a source DVD to a destination DVD.

These and other objects of the present invention are solved by a system for converting DVD based video recording formats among each other, comprising a reader unit for reading source data organized in any DVD-source format from a DVD-source medium; a writer unit for writing destination data organized in any DVD-destination format on a DVD-destination medium; a processing unit coupled with the reader unit for receiving data from the source medium and coupled with said writer unit for supplying data to be written, wherein said processing unit is adapted to convert DVD-source data in any DVD-source format into DVD-destination data in any DVD-destination format.

The objects of the present invention are also solved by a system which comprises a reader unit for reading source data organized in a DVD-source format from a DVD-source medium, an input module coupled with the reader unit for receiving data from the source medium, a writer unit for writing destination data organized in a destination format on a DVD-destination medium, and an output module coupled with said writer unit for supplying data to be written, wherein said input module is adapted to offer or provides source data in at least the DVD-source format and a generic DVD-format, and said output module is adapted to request or get data from said input module in one of said offered DVD-formats depending on the DVD-destination format.

That is in other words that the system comprises two main modules, namely the input module and the output module, both performing a part of the DVD video recording format conversion. The present invention hence provides a modular system which is more flexible with respect to the incorporation of new DVD video recording formats, for example.

In particular, the input module provides an interface offering data in at least two different DVD video recording formats. The first video recording format is the format of the DVD source medium while the second video recording format is a system inherent generic DVD-format. The output module selects one of these offered video recording formats depending on the desired DVD-destination format. Even if the input module does not offer source data in a video recording format corresponding to the destination format, the output module is able to write the destination DVD by using the generic DVD-format.

Due to this inventive modular concept it is easily possible to incorporate a new video recording format for the DVD destination medium just by adapting the output module. The input module has not to be changed since the output module may at least use the generic DVD format for creating the DVD-destination medium.

In the context of the present application, the expression "DVD-medium" not only means a DVD but also any physical data storage for storing the DVD-data, e.g. a hard-disk, a memory stick, etc..

In a preferred embodiment, said input module comprises a data format analysing unit for detecting and analysing the DVD-source format.

It is further preferred that said input module comprises a converting unit for converting said source data in said DVD-source format into said generic DVD-format upon request of said output module.

That is in other words that the input module processes the data on the DVD source medium to supply at least those data being part of the generic DVD-format. All other data being part of the DVD-source format are not considered and will therefore be lost with respect to the DVD-destination medium.

In a preferred embodiment, said output module comprises a converting unit for converting said data requested from and supplied by said input module into said DVD-destination format.

That is in other words that the output module processes the supplied data such that it corresponds to the desired DVD destination format. This is particularly necessary in case that the output module request the data in the generic DVD-format.

In a further preferred embodiment, said DVD-source and destination formats are DVD+R VR (VR means video recording), DVD+RW VR, DVD-RW VR, DVD-RAM VR, DVD-R VR and DVD-video. It is further preferred that that generic DVD-format contains information common to all DVD-source and destination formats.

That is in other words that that generic DVD-format contains the pure video recording data without any supplemental information which is not supported by all DVD-video recording formats. Generally, said generic DVD-format contains just information about chapters and recordings, however no menu, or other information.

In a preferred embodiment, said converting unit of said output module is adapted to request selected data being part of a further DVD-format provided by said input module.

That is in other words that the output module tries to obtain additional information beside that being part of the generic DVD format from the input module as far as it is available. If the output module uses the generic DVD-format for creating the DVD-destination format some of the information elements (information space in the data structure) offered by the DVD-destination format remains unfilled because this information is not part of the generic DVD-format. In this case, the output module tries to obtain this information via the other DVD-formats offered by the input module.

Hence, this measure allows to better process the information available on the DVD source medium.

In a preferred embodiment, a video converter unit coupled with said output module for converting video data on that source medium into a format required by said output module is provided.

This unit serves to convert the video content recorded on the source medium into a format usable by the output module. Such conversion for example comprises a re-quantisation or re-encoding of the video data.

In a preferred embodiment a data allocation unit assigned to said write unit for allocating space on said DVD-destination video when data is not immediately available for writing is provided.

This allocation unit serves to reserve space for video content elements when data is not immediately available for a particular element.

In a further preferred embodiment, a file-system driver unit assigned to said reader unit for reading data on the DVD-source medium in a file system is provided.

This file-system driver unit is used to read data organized on the source medium in a file-system. However, some video recording formats are not providing a file-system but rather relay on a more primitive way of describing an index of the content recorded on the medium, based on tracks, frequents or other ways of representing units of data and allocations. In these cases the file-system driver unit is not active.

The object of the present invention is solved by a method for converting any video recording source format of data stored on a DVD-source medium into any desired video recording destination format, comprising the steps of analysing source data on a DVD-source medium for determining the DVD-source format; generating destination data organized in said desired DVD-destination format by using selected source data on the basis of the result of the analysing step; and writing said destination data on a DVD-destination medium.

The object of the present invention is also solved by a method for converting any video recording source format of data stored on a DVD-source medium into a desired video recording destination format, comprising the steps of analysing source data on said DVD-source medium for determining the DVD-source format, offering or providing said source data in at least said DVD-source format and a generic DVD-format, requesting or getting data in one of said offered DVD-formats depending on the DVD-destination format, parsing said source data into said requested DVD-format, and parsing said data provided in said requested DVD-format into said DVD-destination format.

This inventive method has the same advantages as already pointed out with respect to the inventive system so that it may be referred to the respective passages above to avoid repetitions.

In a preferred embodiment, said DVD-source format and said DVD-destination format is one of DVD+R VR, DVD+RW VR, DVD-RW VR, DVD-RAM VR, DVD-R VR and DVD-video and possibly others as they hit the market. It is further preferred that that generic DVD-format is selected so that it contains only information common to all DVD source and destination formats.

In a preferred embodiment, said steps of analysing, offering and parsing said source data are performed by an input module and said steps of requesting and parsing said data are performed by an output module.

This modular approach has the advantage that future changes or adaptations of the method may be carried out more easily in contrast to a none-modular design.

In a preferred embodiment, the step of requesting data in one of said offered DVD-formats comprises the step of determining which of the offered DVD-formats matches best with the DVD-destination format.

That is in other words that the input module offers source data in at least two, preferably more DVD-formats and the output module uses the offered DVD-format which contains the most usable data for creating the DVD-destination format.

In a further preferred embodiment, for elements in said DVD-destination format having no correspondence in said requested data corresponding data is searched and requested in the remaining offered DVD-formats.

That is in other words that the output module always tries to obtain as much usable data as possible even if this data is not part of the requested DVD-format. The output module is able to use data being part of other offered DVD-formats.

In a preferred embodiment, the method comprises the step of converting a video content recorded on said source medium into a video format desired for said DVD-destination medium. More preferably, the method comprises the step of writing said data in said DVD-destination format on said DVD-destination medium, wherein the step of writing said data is performed without using extra temporary storage.

The object of the present invention is also solved by a computer program product stored on a computer usable medium, for converting any video recording source format of data stored on a DVD-source medium into a desired video recording DVD-destination format, wherein said computer program product comprises computer readable program means for carrying out the inventive method as described above.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

### Brief description of the drawings

Embodiments of the invention are shown in the drawings and will be explained in more detail in the description below with reference to same. In the drawings:
- Figure 1: shows a block diagram of a system according to the present invention, and
- Figures 2a-d: show examples of different converting constellations for explaining the function of the input and output modules.

### DETAILED DESCRIPTION OF PREFERRED EMBODIMENTS

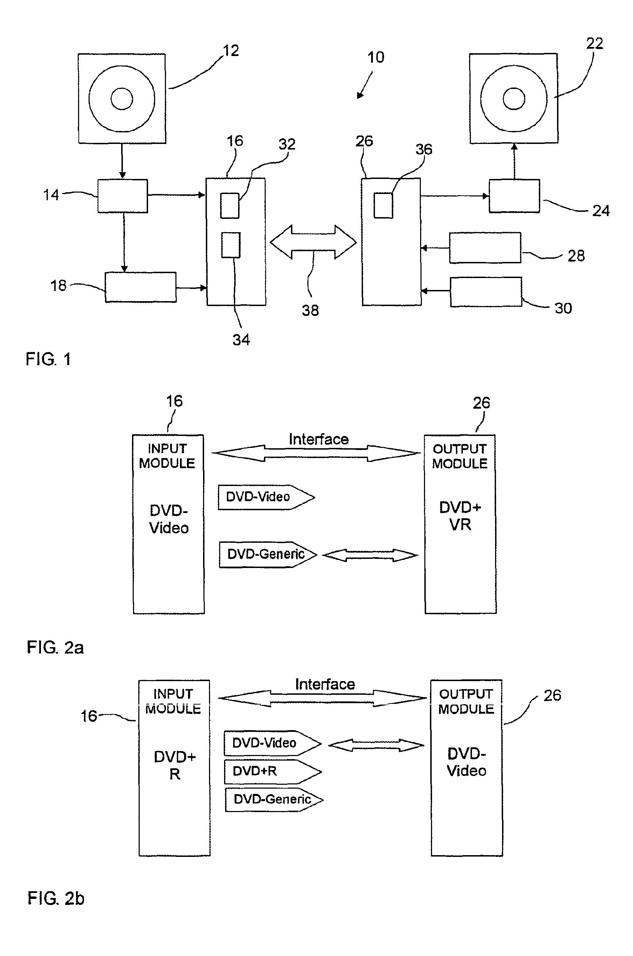

In Fig. 1 a system for converting DVD based video recording formats is shown in form of a block diagram and is indicated with reference numeral 10. The system 10 may be part of a home DVD video recorder or e.g. a computer.

The system 10 comprises a first DVD drive 12 allowing to play any DVD. Assigned to the first DVD drive 12 is a reader unit 14 which serves to manage the read operation of the DVD-drive 12, particularly to read out requested data from a DVD medium in the DVD drive 12.

The system 10 further comprises an input module 16 which is coupled with the reader unit 14, for example for transmitting data requests to the reader unit 14 as to access data on a DVD-medium.

The input module 16 also communicates with a file-system unit 18. The file-system unit 18 is provided to read data on the DVD medium in the DVD-drive 12 (source medium), the data being organized in a file-system (which is not always the case). Hence, the file-system driver unit supports the reader unit in accessing and transmitting data to the input module 16.

As it is apparent from Fig. 1, the system 10 also comprises a second DVD-drive 22 which allows to record data on a DVD-medium (DVD-destination medium). Hence, the second DVD-drive 22 is a DVD burner. Although the system 10 shown in Fig. 1 uses two different DVD-drives 12, 22, both DVD-drives 12, 22 may be provided as one single DVD-drive which allows to read and to write data on a DVD-medium.

For managing the write operation on the DVD-destination medium, a write unit 24 is provided and coupled with the second DVD-drive 22. The write unit 24 communicates with an output module 26 which supplies the data to be written on the DVD-destination medium. The function of the output module 26 will be described below.

The system 10 also comprises a data allocation unit 28 and a video converter unit 30 both being coupled with the output module 26. The data allocation unit serves to reserve space during writing of data when data is not immediately available for a particular element.

The video converter unit serves to convert video content recorded on the source medium into a format usable by the output module.

Fig. 1 further shows that the input module 16 comprises a data format analysing unit 32 which serves to analyse the data format on the DVD source medium.

As it is generally known, there is no common hierarchical structure (called "format") for organizing data on a DVD-medium, particularly video recording data. Instead, up to now there are a plurality of different DVD-formats, some of which being not compatible to each other. Therefore, it may be that a DVD comprising data organized in a first DVD-format may not be read by some DVD-player.

As already mentioned before, the presently used DVD-formats are DVD+R VR (video recording), DVD+RW VR, DVD-R VR, DVD-RW VR, DVD-video and DVD-RAM.

The data format analysing unit 32 is hence adapted to determine which of the mentioned DVD-formats is used on the DVD-medium in the DVD-drive 12.

Further, the input module 16 comprises a converting unit 34 which is adapted to convert the data stored on the DVD-source medium in at least one other DVD-format, for example a system inherent generic DVD-format.

The generic DVD-format may be described as an intersection of the above-mentioned presently used DVD-formats. This means in other words that the generic DVD-format provides those data which are absolutely necessary for creating any of the above-mentioned DVD-formats. In particular, such generic DVD-format comprises at least chapter and recording information. In addition to that, special extensions will be provided to allow custom conversion between similar formats, maintaining as much of the original medium's layout as possible. For example, when converting from DVD+R VR to DVD+RW VR or to DVD-Video, the layout of the menu presented to the user when the disc is inserted, can be maintained while this will not be supported when converting to/from DVD-{RW/RAM} VR. Such additional information shall never be necessary to produce the destination medium but will significantly increase the richness of reproduction of the original medium, adding non-generic details wherever applicable.

A further converting unit 36 is part of the output module 26 and serves to convert received data into the desired DVD-destination format.

In Fig. 1, an arrow 38 indicates that the input module 16 and the output module 26 communicates with each other for accessing and transmitting data from the DVD-source medium to the DVD-destination medium.

The input module 16 and the output module 26 are the main elements within the system 10 for processing and converting data from one DVD-format into another. The function of both modules 16, 26 will now be described with reference to Figs. 2a - d.

In Fig. 2a it is assumed that the DVD-source medium contains data organized according to the DVD-video format. Further, it is assumed that the data to be stored on the DVD-destination medium in the DVD-drive 22 should be organized in the DVD+R VR format.

First, the input module 16 determines the format of the DVD-source medium by analysing source data on this medium. This will be performed by said data format analysing unit 32. Particularly, the data format analysing unit 32 analysis the source medium by reading file-system and video recording components up to the point where all relevant information has been collected to provide an outline of the source medium's recording structure, that is number of recordings, the playing time, chapter marks and other key information.

In the next step, the input module 16 offers the data on the source medium in two different DVD-formats, namely in the DVD-video format (which is the DVD-source format) and a generic DVD-format. This generic DVD-format sufficiently describes the source medium to be able to generically reproduce it in an other video format.

In other words, the input module 16 provides two different interfaces for accessing data on the source medium.

The output module 26 now checks whether the input module offers an interface corresponding to the desired DVD-destination format, which is the DVD+R VR format in the present example. Since such an interface is not offered by the input module 16, the output module 26 uses the generic DVD-format interface for accessing data from the DVD-source medium.

The output module 26 uses this generic DVD-format interface for accessing and requesting data, which are then used for creating the desired DVD+R VR format. Since this generic DVD-format interface provides only a minimum of information, the DVD+R VR format contains elements (in the data structure) not being filled with data from the source medium.

In Fig. 2b, a further example is shown. Here, it is assumed that the DVD-source medium contains data structured in the DVD+R VR format and the destination medium shall contain data structured in the DVD-video format.

In this example, the input module 16 offers (after analysing the data structure on the DVD-source medium) three different DVD-format interfaces, namely DVD-video format, DVD+R VR format and the generic DVD-format interface. The DVD-video format interface may be offered since the source format is very similar to that.

As already mentioned before, the output module 26 first requests for an DVD-video format interface. Since the input module 16 offers such an interface, the data transmission between the input module 16 and the output module 26 is carried out via the DVD-video interface. Hence, the output module 26 have not to pars or convert the received data into another format.

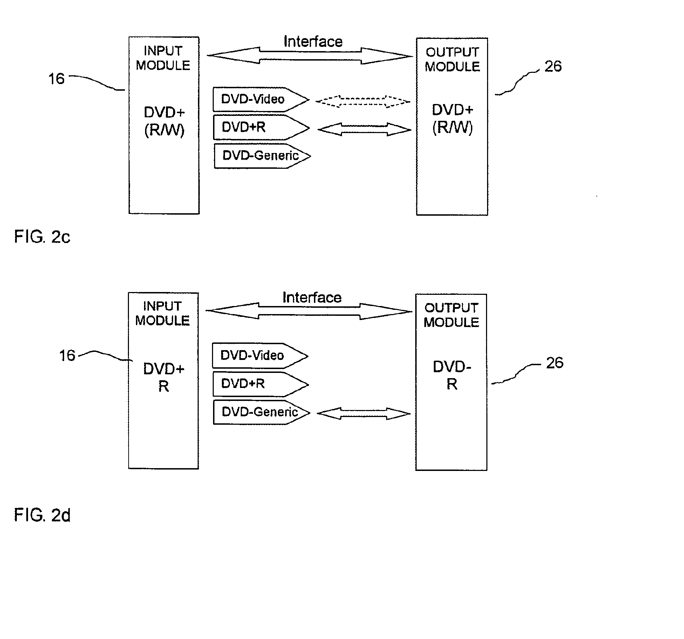

In Fig. 2c, a further example is shown. Here, it is assumed that the DVD-source medium contains data structured in the DVD+R or DVD+RW VR format and the data on the destination medium shall be stored in the DVD+R or DVD+RW VR format.

The input module 16 offers three different interfaces, namely a DVD-video format interface, a DVD+R format interface and the generic DVD-format interface. As mentioned before, the DVD-video format interface may be also offered since the DVD+(R/W) format is very similar to that.

The output module 26 uses the DVD+R format interface for accessing data since this interface allows to use the data without any further format processing. Nevertheless, the output module 26 could also use the DVD-video format interface as it is indicated by an arrow in phantom lines, because of the similarities between both formats.

In Fig. 2d a further example is shown. Here, it is assumed that the source medium contains data structured in the DVD+R VR format and the data on the DVD-destination medium shall be structured in the DVD-R VR format.

The input module 16 offers three different interfaces, namely a DVD-video format interface, a DVD+R format interface and a generic DVD-format interface. Due to lack of conformity between DVD-R format and the DVD+R format, the output module 26 uses the generic DVD-format interface for accessing data from the source medium. This data will then be used for creating the DVD-R format used on the destination medium.

It is to be noted that the examples shown in Figs. 2a - d are only some of the converting pairs between the presently used DVD-formats. However, it may be seen that in all cases, the input module 16 offers at least a generic DVD-format interface as well as an interface corresponding to the DVD-format of the source medium. Hence, the output module 26 may always access the main data on the source medium for creating the DVD-destination format by using the generic DVD-format interface.

It is also to be noted that the described inventive method may be implemented as software or hardware. Particularly, both modules 1b, 2b may be realised as software or hardware modules.

In the following, a brief description of the mentioned DVD formats presently used and details concerning the conversion between different DVD-formats is given.

### 1. Supported DVD video formats and their applications

### a. DVD-Video

DVD-Video as according to the DVD-Video specification published by the DVD Forum was the initial format used to provide video content on DVD media. It is a read-only format that requires mastering that is, creating the entire medium at once, using pre-processed video data. Key features of this medium format are:
- Playable on all consumer DVD-Video players
- Can be created using mastering applications such as Nero Vision Express 2
- Can be copied on a per file basis as well as sector by sector
- Readable and reproducible on PC systems
Restrictions:
- Once written, video content cannot be modified any more
- Once written, no video content can be appended
- No Real-Time recording possible because video content needs to be mastered

### b. DVD-R Video Recording

The format used for creating DVD-Video compatible media using real-time recording. Currently, manufacturers are using primarily proprietary standards.

In addition to the properties described for a. the following applies:
- Video data can be appended to the medium even if it already contains some content
Restrictions:
- Unless finalized, DVD-R Video Recording media are not playable in standalone players. Instead, the recording device initially used for recording must be used for playback
- When finalized, no content can be appended, finalization is irreversible
- Existing recordings cannot be modified in any way, e.g. it is not possible to set chapter marks or define alternative play-lists
- Media cannot be exchanged among different brands/models of recorders

### c. DVD+R VR

The DVD+R VR format has been standardized by the DVD+RW Alliance to foster free exchangeability among set-top recorders while maintaining both a reasonable set of editing features and high compatibility to DVD-Video standalone players. The following specialties apply to this format (in comparison to the DVD-R Video Recording format)
- Chapter marks can be set/modified
- Play-Lists can be defined after recording
- DVD+R VR media contain a disc menu that is overwritten when taken from one brand of recorders to another
- Free exchangeability of media among recorders supporting the DVD+R VR recording format
Restrictions:
- Finalized DVD+R VR media do not comply 100% to the DVD-Video specification
Supported Audio Formats:
- All formats defined by the DVD-Video specification,
- Dolby AC-3 / MPEG-1 Audio are mandatory
Supported Video Formats:
- MPEG-1 (NTSC: 352x240/PAL: 352x288),
- MPEG-2 "Half D1" (NTSC: 352x480/PAL: 352x576),
- MPEG-2 D1 (NTSC: 720x480/PAL: 720x576)
Supported Bit-rates:
- All Bit-Rates supported by DVD-Video

### d. DVD+RW VR

Just as its write once companion DVD+R VR, this format has been standardized by the DVD+RW Alliance. By using DVD+RW media which are rewritable, it is possible to reuse space used for deleted recordings. Although this is not supported by most set-top recorders or at least supported only in a limited way, PC software like Ahead Software's DVD+/-VR defragmenter may be used to take full advantage of that possibility:
- Recordings can be physically deleted, making the space they consumed available again
- Media need not be finalized to be playable on most standalone players as long as they contain at least 1 GB of recorded data
Supported Audio Formats:
- All formats defined by the DVD-Video specification,
- Dolby AC-3 / MPEG-1 Audio are mandatory
Supported Video Formats:
- MPEG-1 (NTSC: 352x240/PAL: 352x288),
- MPEG-2 "Half D1" (NTSC: 352x480/PAL: 352x576),
- MPEG-2 D1 (NTSC: 720x480/PAL: 720x576)
Supported Bit-rates:
- All Bit-Rates supported by DVD-Video (maximum/variable-maximum bit-rate 9.80Mbps)

### e. DVD-RW/RAM VR

The DVD-RW VR is the designated format to be used for recording video data as specified by the DVD Forum. As the only listed format it doesn't have any kind of compatibility with the DVD-Video format and is not playable by standalone DVD-Video players. Apart from a different file naming scheme, a different version of the UDF file-system is used for storing the video content (UDF 2.00). The following features are provided by this format:
- Simultaneous playing and recording supported for DVD-RAM media, allowing time-shifted playback of recordings
- Medium remains completely editable
- Space of deleted recordings is always made available again
Restrictions:
- Not compatible with DVD-Video players
Supported Audio Formats:
- All formats defined by the DVD-Video specification,
- Dolby AC-3 / MPEG-1 Audio are mandatory
- 0-7 audio channels
Supported Video Formats:
- MPEG-2 D1 (NTSC: 720x480, PAL: 720x576)
- NTSC: 704x480, PAL: 704x576
- MPEG-2 "Half D1" (NTSC: 352x480, PAL: 352x576)
- MPEG-1 (NTSC: 352x240, PAL: 352x288)
- NTSC: 544x480, PAL: 544x576
- NTSC: 480x480, PAL: 480x576
Supported Bit-rates:
- Maximum/Variable-maximum Bit-Rate 9.80Mbps for MPEG-2

### 2. Conversion among the different DVD recording formats

The six formats described above used for recording DVD media can be converted amongst each other. In some cases, the medium only needs to be copied which would correspond to the prior approach only allowing a copy of data organized in the same DVD-format. In others, major parts of the medium's layout need to be reworked. The table below specifies the different recording formats (left to right) and what needs to be done for conversion to a specific destination format (top to bottom):

| | DVD-Video | DVD-R "VR" | DVD+R VR | DVD+RW VR | DVD-RW VR | DVD-RAM VR |
|---|---|---|---|---|---|---|
| DVD Video | | Source finalized: COMPATIBLE Source not finalized: MISSINGSPEC | CONTENT_PAT CHING, 3.d | CONTENT_PATCHI NG, 3.d | REAUTHOR, 3.f | REAUTHOR, 3.f |
| DVD-R "VR" | Finalized: COMPATIBLE Not finalized: MISSINGSPEC | | Finalized: CONTENT_PAT CHING, Not 3.d | Finalized: CONTENT_PATCHI NG Not 3.d finalized: MISSINGSPEC | Finalized: REAUTHOR Not finalized: MISSINGSPEC | Finalized: REAUTHOR Not finalized: |
| | | | finalized: MISSINGSPEC | | | MISSINGSPEC |
| DVD+R VR | REENCODE | Source finalized: REENCODE Source not finalized: MISSINGSPEC | | FILESYSTEM_RECREAT ION, 3.e | REAUTHOR, 3.e | REAUTHOR, 3.e |
| DVD+RW VR | REENCODE | Source finalized: REENCODE Source not finalized: MISSINGSPEC | FILESYSTEM_RECR EATION, 3.a | | REAUTHOR, 3.e | REAUTHOR, 3.e |
| DVD-RW VR | REENCODE | Source finalized: REENCODE Source not finalized: MISSINGSPEC | REAUTHOR, 3.g | REAUTHOR, 3.g | | FILESYSTEM_RECR EATION, 3.c |
| DVD-RAM VR | REENCODE | Source finalized: REENCODE Source not finalized: MISSINGSPEC | REAUTHOR, 3.g | REAUTHOR, 3.g | FILESYSTEM_MODIFIC ATION, 3.b | |

### Legend (increasing level of complexity):

- COMPATIBLE: The formats are compatible in the specified direction, so a 1:1 copy can be performed
- SECTORMAPPING: the formats are compatible once sector mapping is applied, basically this also allows media to be converted using 1:1 copy as long as sector mapping is transparently applied
- FILESYSTEM_MODIFICATION: The file-systems used for source and destination medium are slightly different but can be converted in the specified direction by applying some sector patches
- FILESYSTEM_RECREATION: The file-systems used for source and destination medium are too different to be modified through sector patches. While the actual user content (files) are the same for source and destination media, the file-system has to be re-authored
- CONTENT_PATCHING: Both the file-system and some or all user content (files) need to be modified. While the file-system is being re-authored, user content is modified by applying patching.
- REAUTHOR: Considerable parts of the user content need to be re-created. This will be the e.g. when menu presentation or navigation data needs to be created from scratch
- REENCODE: The user content may have to be re-authored down to the level of the MPEG2 video data or audio content
- MISSINGSPEC: converting into this medium type is possible, however a specification is necessary. To support this combination, either an input or a producer plug-in would need to be implemented according to the missing specification

### a. Conversion between DVD+RW VR and DVD+R VR

This is the simplest case in the diagram above. It can be accomplished without having to recreate the file-system or any of the actual presentation or navigation content. It all adds up to having to resolve or create the RSAT sector mapping table mapping sector addresses into the first 15872 logical blocks of an un-finalized DVD+R VR medium. There are three different scenarios that can occur when copying from/to a DVD+R(W) VR medium:
- Creation of a sector by sector 1:1 copy when converting from DVD+RW VR to finalized DVD+R VR
- When converting from finalized DVD+R VR to DVD+RW VR, the file VIDEO_RM.DAT must be created, referencing a designated VRMI Scratch area. This area is not mandatory for DVD+R VR and thus might not be present. Thus, the File-System must be re-created using the Nero-API Neroburn() function with the +VR flag set
- Interpreting RSAT table, remapping sectors of reserved fragment. (A LBN-based medium reader interface supporting transparent RSAT mapping has already been implemented in Nero-API)
   1. when converting from un-finalized DVD+R VR to DVD+RW VR
   2. when converting from un-finalized DVD+R VR to finalized DVD+R VR
- Creating a reserved fragment of 15872 logical blocks at the beginning of the medium, rewriting all files located within the first 16384 logical blocks of the DVD+RW VR medium using the Nero-API Neroburn() call with the +VR flag set. Note that since the addressable reserved area on DVD+R VR is smaller than the maximum rewritten area of a DVD+RW VR medium, the file-system needs to be re-created when converting from DVD+RW VR to un-finalized DVD+R VR
- When converting from finalized DVD+R VR to un-finalized DVD+R VR is done by performing a sector by sector copy, sparing out the first 15872 logical blocks of the disc and replacing this area with a reserved fragment. Copying must stop before the 2^{nd} AVDP appended to the medium upon finalization)

### b. Conversion from DVD-RW VR to DVD-RAM VR

While not quite as simple as the previous topic, the conversion from DVD-RW VR to DVD-RAM VR does not require the entire file-system to be re-authored. By avoiding file-system re-creation the described method not only ensures that there will not be any loss of data due to file-system errors on the medium, it also helps to maintain maximum compatibility with the original producer of the medium by maintaining all the attributes and implementation-specific details the originator produced.

The differences between the file-systems used for DVD-RW and DVD-RAM VR are only marginal:
- DVD-RAM does not require active defective management using sparing tables. Thus, the partition type needs to be switched from 'sparing partition' to 'physical partition'. Any instances of the sparing table as well as the designated sparing area may be erased when copying from DVD-RW to DVD-RAM. Any disc space freed because of that may be added to the space available for recording. However, the sparing table must be resolved when copying the logical blocks building the UDF partition as defective blocks may have been found and replaced during the initial recording phase of the DVD-RW medium.
- DVD-RAM is not working on a packet level. Thus, the packet-size for DVD-RAM media is generally one logical block. As this value is stored within the UDF file-system's recognition sequence, it needs to be corrected during conversion from one medium type to the other. All values within the file-system that are specified in packets rather than blocks need to be scaled accordingly with the exception of sparing tables and sparing replacement area which are to be erased on the destination medium.

### c. Conversion from DVD-RAM VR to DVD-RW VR

While generally similar to the conversion from DVD-RW to DVD-RAM VR, this task cannot be performed easily by transparently modifying the existing file-system. The reason for this is that on packet writing media, all DVD-VR files must be aligned on a packet boundary which for DVD-RW is 16 logical blocks while DVD-RAM does not have a designated packet size so a packet size of 1 logical block is assumed. Modifying an existing file-system to have all it's objects aligned correctly would require relocating all file items and adapting their references. While technically possible, it is a lot easier to recreate the file-system from scratch. Thus, when copying from DVD-RAM to DVD-RW, files stored on DVD-RAM will be added to a UDF 2.00, Physical Partition file-system adapted to the DVD-RW VR specification and adhering to all it's restrictions and will be written to the destination medium using Nero-API and the built-in UDF file system generator.

### d. Conversion from DVD+R(W) VR to DVD-Video

Converting from DVD+R(W) VR to DVD-Video can be accomplished by re-authoring the file-system and applying some patching to the user content (files). In particular, RLBN references within the .IFO files need to be adapted because of the modified writing order of such files as defined by the +VR format specification. In addition to that, the following DVD-Video specification violations need to be resolved:
- All .IFO files are located before any .VOB files. All VTS_Ox_y.VOB with the same y are sharing their physical location. Resolving this will require all .VOB files to be recreated to the end that all title-sets are referencing a unique range of logical blocks. Source as well as destination medium will contain up to three title-sets, one for each recording format supported: MPEG1, MPEG-2 Half D1, MPEG-2 D1
- Unique numbers need to be provided for all VOBs within the shared VTSTT_VOBS
- Cell numbering must be adapted to use sequentially increasing cell numbers
- Removal of unused VOB space not referenced by the program chain
- Forward search pointer timestamps must be corrected
- Correction of the presentation termination time of the last video frame of a VOB
- Rules for P-STD_buffer parameters (for DVD+VR these parameters are included in any packet header after the first VOBU)

All these changes are accomplished by transparently patching file-objects taking their input data from the original files stored on the source medium.

### e. Conversion from DVD-VR to DVD+VR

This process is marked as requiring re-authoring which is true only in a way. While DVD-VR media do not contain a menu, it can be generated from the information available through parsing the VR_MANGR.IFO and applying a self-defined menu template.

As the menu layout for +VR media may be changed any time until the medium is finalized, the menu template doesn't have to be too elaborated as a proper menu may be created using e.g. Nero Vision Express 2 (a product of the assignee of the present application) if desired.

When converting from DVD-VR to DVD+VR, the following things need to be taken into account:
- All .IFO and .BUP files need to be generated from scratch as VR_MANGR.IFO does not have much in common with DVD-Video .IFO files
- A menu template must be used to generate a title/root menu from VR_MANGR.IFO that can be presented to the user
- DVD+VR video recording management information (VRMI) must be generated from VR_MANGR.IFO
- Still pictures and audio-only recordings made to VR_STILL.VRO and VR_AUDIO.VRO need to be converted into normal +VR recordings
- The DVD-VR video resolutions below are not supported by DVD+VR and will prevent 1:1 conversion of the medium using described method. The reason is that changing the resolution of the video stream requires re-encoding which implies re-creation of all time stamps and consequently the medium's navigation layout rather than just the structures describing it:
   ■ NTSC: 704×480, PAL: 704×576
   ■ NTSC: 544×480, PAL: 544×576
   ■ NTSC: 480×480, PAL: 480×576
- Navigation Packs (NAV_PCK) need to be created from DVD-VR Real-time Data Information packs (RDI_PCK) at the beginning of each VOBU. This process also requires incorporation of search pointers coded in VR_MANGR.IFO to create Data Search Information (DSI) Packets. Each RDI_PCK is replaced by exactly one NAV_PCK
- PCI packets need to be converted
- DVD+VR limits the maximum presentation period of a cell ("DVD+RW Video Format Specifications", 3.2.3.2), so input cells coming from a DVD-VR medium may need to be split. DVD+VR is doing this to be able to edit on a per cell basis without having to initially modify the navigation packs (this must be done in order to "apply" changes done to the playback sequence to also take effect on standalone DVD-Video players)

Note that any additional data stored on a DVD-VR medium that is not part of the video content is lost during conversion. This might be changed in the future when creation of DVD+VR 2.0 media is supported.

### f. Conversion from DVD-VR to DVD-Video

Conversion from DVD-VR to DVD-Video is similar to DVD-VR to DVD+VR conversion. In respect to the statements above, there are only two major differences:
- The menu layout cannot be changed once it has been created. Thus, it is even more desirable to give the user some choice in respect to the menu layout to be used for his medium, e.g. by using the menu editing functionality of Nero Vision Express 2
- The resolution NTSC: 704x480/PAL: 704x576 exempt from DVD-VR to DVD+VR conversion are is supported when converting to DVD-Video since only DVD+VR is limited to three recording resolutions rather than allowing all DVD-Video recording modes (the reason is likely to be related to the fact that one title-set is required per video resolution used and a maximum of three title-sets is defined to be allowed for DVD+VR media). The remaining DVD-VR specific video resolutions still prevent us from converting DVD-VR to DVD-Video

### g. Conversion from DVD+VR to DVD-VR

Conversion from DVD+VR to DVD-VR is less problematic from an implementation perspective than going the opposite direction. However, all menu presentation is lost during the process since DVD-VR does not provide for a means to define custom menus. Secondly, while DVD-VR supports a few exceptional resolutions not supported by the DVD-Video specification, all resolutions provided for by DVD-Video are also supported by DVD-VR so all media and titles thereof can effectively be converted to DVD-VR.

These are the steps necessary for this conversion:
- The VR_MANGR.IFO file needs to be created from information stored in VRMI and VTS_0x_0.IFO, menu data is discarded during the process
- DVD-VR Real-Time Data Information Packs (RDI_PCK) need to be created from navigation packs (NV_PCK)
- Data Search information as stored in VR_MANGR.IFO may have to be extracted from navigation packs (NV_PCK)
- PCI packets need to be converted

### 3. VR Recording formats and the kind of information provided

### a. The +VR recording format

- TV System used for recording the disc (PAL, NTSC)
- Date and Time of last change
- Disc Key Frame Reference
- Disc name and format, Alternative disc name and format
- Manufacturer ID, Recorder Model ID, Firmware ID
- Menu Layout ID
- Number of full titles (Recordings, Maximum 49)
- Title playback order
- Global chapter markers for the entire disc:
   1. uniquely referencing one video frame by VOBU and frame number
   2. special flag for chapter markers referencing the beginning of a recording, a cell or a VOBU
   3. Chapter Key Frame Reference
- For each recording:
   1. Write protection flag
   2. Bit-rate description
   3. Bit-rate mode (variable bit-rate, variable bit-rate with maximum, constant bit-rate, mixture of CBR and CVBR) or unspecified
   4. Input source (Analogue/Digital Camera, Analogue/Digital Broadcasting, Analogue/Digital Unknown, Mixed, Unspecified)
   5. Content classification (Level 1, Level 2) according to EN 300 468
   6. optionally IEC-60958 audio data
   7. Recording Date and Time
   8. Total Playing Time of Full Title
   9. Recording Key Frame Reference
   10. Recording Name and Format, Alternative Name and Format
   11. One play list containing up to 99 chapter references, Chapters may be referencing in any order and more than once
- Free areas are specified by a sector range in the order they occur, Recordings may not be fragmented/interleaved
- DVD-Video compliant menu and navigation data for backwards compatibility to DVD-Video Standalone Players and for enhanced user experience
- For each VOBU (Video Object Unit):
   1. Aspect ratio
      a. 4:3 full format
      b. 14:9 letterbox, center position
      c. 14:9 letterbox, top position
      d. 16:9 letterbox, center position
      e. 16:9 letterbox, top position
      f. >16:9 letterbox, center position
      g. 14:9 full format, center position
      h. 16:9 full format, center position
   2. Recording Date/Time
   3. Subtitling mode ( Subtitles in active image area, Subtitles out of active image area)
- Optionally line 21 data is specified in the user_data() field of the GOP layer of the video stream, providing closed captioning understandable by TV sets supporting it (subtitles TV broadcasts, for the hearing impaired etc.)

### b. The -VR recording format

- Still Pictures as a separate recording component, their global presentation time in seconds
- Resume Marker specifying where to continue with playback
- Disc Key Frame Reference
- Disc Key Frame Creation Time
- Disc Name, Alternative Disc Name and format
- Support for 99 global play lists:
   1. Play List Type (Still, Movie, Hybrid)
   2. Creation Date/Time
   3. Textual description
   4. Play List Key Frame Reference
- Number of full titles (Recordings, Maximum 64)
- For each Stream
   1. Video compression (MPEG-1,MPEG-2)
   2. TV system used for recording this title (PAL, NTSC)
   3. Aspect ratio (4:3, 16:9), may also be specified per VOBU in RDI_PCK
   4. Flag indicating availability of line 21 data stored in user_data() of GOP layer of video stream (specified separately for field 1 and field 2 of interlaced video signal)
   5. Video resolution:
      a. MPEG-2 D1 (NTSC: 720x480, PAL: 720x576)
      b. NTSC: 704x480, PAL: 704x576
      c. MPEG-2 "Half D1" (NTSC: 352x480, PAL: 352x576)
      d. MPEG-1 (NTSC: 352x240, PAL: 352x288)
      e. NTSC: 544x480, PAL: 544x576
      f. NTSC: 480x480, PAL: 480x576
   6. Audio Format used for recording (Dolby AC-3, MPEG-1 or MPEG-2 without extension bitstream, MPEG-2 with extension bitstream, Linear PCM audio) and application flag specifying channel distribution as well as audio bit-rate
   7. Sub-Picture stream presentation color
- For each recording
   1. Recording Time
   2. Stream number associated with this recording
   3. Start presentation time
   4. End presentation time
   5. Audio gap information
- For each still picture stream information
   1. Video compression (MPEG-1,MPEG-2)
   2. TV system used for recording this title (PAL, NTSC)
   3. Aspect ratio (4:3, 16:9), may also be specified per VOBU in RDI_PCK
   4. Video resolution:
      a. MPEG-2 D1 (NTSC: 720x480, PAL: 720x576)
      b. NTSC: 704x480, PAL: 704x576
      c. MPEG-2 "Half D1" (NTSC: 352x480, PAL: 352x576)
      d. MPEG-1 (NTSC: 352x240, PAL: 352x288)
      e. NTSC: 544x480, PAL: 544x576
      f. NTSC: 480x480, PAL: 480x576
   5. Audio Format used for recording (Dolby AC-3, MPEG-1 or MPEG-2 without extension bitstream, MPEG-2 with extension bitstream, Linear PCM audio) and application flag specifying channel distribution as well as audio bit-rate
   6. Sub-Picture stream presentation color
- For each still picture group
   1. Number of video parts (Maximum 64)
   2. Still picture stream number
   3. First Recording Time
   4. Last Recording Time
- For each VOB in still picture group information on associated audio
- Optionally line 21 data is specified in the user_data() field of the GOP layer of the video stream, providing closed captioning understandable by TV sets supporting it (subtitles TV broadcasts, for the hearing impaired etc.)
- Optional textual Information in Play List and Program
- Manufacturer ID of last recorder modifying the medium
- For each movie cell:
   1. Number of entry points (chapters)
   2. Entry points by Presentation Time (Maximum 99), containing optional Primary Text Info
   3. Associated recording
- For each still picture cell:
   1. Associated Still picture group
   2. Number of entry points
   3. Entry points specified by number (Maximum 99), containing optional Primary Text Info
- For each VOBU (Video Object Unit):
   1. Recording Time
   2. Aspect ratio (4:3, 16:9, 14:9 letterbox center, 14:9 letterbox top, 16:9 letterbox center, 16:9 letterbox top, >16:9 letterbox center, 14:9 full format center)
   3. subtitling mode (no open subtitle, subtitles in active image area, subtitles out of active image area)
   4. film camera mode (camera mode, film mode)
   5. Manufacturer ID of recorder used to create VOBU

### 4. Brief summary of the invention

The application relates to a system and method for converting DVD based video recording formats among each other. Hence the inventive system and the method allows to convert any DVD-video recording format in any other DVD-video recording format.

The application relates according to a preferred embodiment to a method and a system of converting the different DVD based video recording formats (namely DVD+R VR, DVD+RW VR and DVD-RW/RAM VR) as well as the read-only DVD-Video format and their recordable variant, the DVD-R video recording format amongst each other. The primary goal is to make re-mastering unnecessary by incorporating all information available on the original medium to create the disc layout of the destination disc. No temporary storage space other than a data processing application's RAM shall be used while copying. Furthermore, copying shall take place from one medium of a specific kind (as listed above) to a different kind from the list of supported medium formats

The generic Video Recording Format conversion as described above consists of several distinct parts which are designed in a modular and extensible way. Communication between those parts is performed using extensible and clearly-defined interfaces in a way that a variety of plug-ins may be used in conjunction with each other to convert from any video recording format to another.

### a. Reader unit driver 14

This module is to provide low-level block reading access to the source medium, exporting a generic and extensible interface that is independent of the underlying hardware (e.g. the reader unit). The extensibility of this interface is used to provide low-level information about the source medium being dependent on the input recording format.

### b. File-System driver 18

In as far as required, a file-system driver exporting a generic and extensible interface shall be used to read data organized on the source medium in a file-system. Communication with the hardware is performed using the Reader unit driver and sector access layer (a.) to be independent of the underlying hardware.

### c. Input Module 16

Access to the medium is provided independently by both a. and b. where b. is an optional component applicable only for input formats containing a file-system (some video recording formats are not providing a file-system but rather rely on a more primitive way of describing an index of the content recorded on the medium, based on tracks, fragments or other ways of representing units of data and their locations).

As a first step, this module will analyse the source medium by reading file-system and video recording components up to the point where all relevant information has been collected to provide an outline of the medium's recording structure that is number of recordings, their playing time, chapter marks and other key information. All this information will then be provided through a generic interface, sufficiently describing the medium to be able to generically reproduce it in another video recording format. In addition to that, special extensions will be provided to allow custom conversion between similar formats, maintaining as much of the original medium's layout as possible. For example, when converting from DVD+R VR to DVD+RW VR or to DVD-Video, the layout of the menu presented to the user when the disc is inserted, can be maintained while this will not be supported when converting to/from DVD-{RW/RAM} VR. Such additional information shall never be necessary to produce the destination medium but will significantly increase the richness of reproduction of the original medium, adding non-generic details wherever applicable.

The second step will consist of providing video content recorded on the medium in the original format stored on the source medium. This is done by means of a piping object, allowing any interested parties to read video content for specific recording or part of a recording from the input module.

### d. Video Format Conversion unit 30

If necessary, the video content recorded on the source medium needs to be converted into a format usable by the Output Module. This module is to take responsibility of converting video content accordingly. Such conversion shall take care of gradually changing the video content only as much as strictly required, e.g. no re-encoding shall take place if the compression format is already compatible. Instead, re-quantization shall be considered in as far as only the bit-rate needs to be limited. As a general rule, as much of the original format as possible shall be preserved during the conversion process.

### e. Output Module 26 with a Destination Format Authoring

Provided with the output of the Input Module described in a. this layer will reproduce recordings in the destination format it has been implemented for. Generic information as obtained through the interface mentioned in a. will be interpreted using additional, non-generic information as far as it is available. Video format conversion is triggered by this module as required, by specifying a list of supported destination formats to the video format converter (d.).

The Output Module communicates with the recording hardware through a driver using a descriptive interface, describing portions of data and their intended layout on the destination medium as well as the writing order of such elements. The latter is necessary in order to allow data portions to be dependent on each other. Although the logical layout of the video recordings to be reproduced are described sufficiently well, it may become necessary to convert video content using a video content converter as described in a. in order to obtain recorded data in a format that can be stored on the destination medium. In this case, the final physical layout of the destination medium depends on the allocation space required for the converted video data whose size is usually known only after encoding it. In order to prevent intermediate storage, e.g. on a hard-disk, data elements need to be produced in a certain order such as to allow the allocation space required for the video data to be known when the element describing the video data is written to the destination medium.

### f. Data allocation unit 28

This module will interpret the production rules for the video content elements by reserving space when data is not immediately available for a particular element. Implementation of this mechanism is based on an abstract block writing interface providing extensions for particular types of media.

### g. Writer Unit Driver unit 24 with block based content output

Destination medium writer hardware is being accessed through a dedicated recorder driver, providing a generic and extensible interface for block-based writing of the destination medium. Depending on the video recording format being used and the type of destination media, additional functionality is provided by interface extensions, e.g. for reserving space on a write-once medium.

Those skilled in the art can now appreciate from the forgoing description that the broad teachings of the present invention can be implemented in a variety of forms although a specific implementation has been described in detail. Therefore, while this invention has been described in connection with a particular example thereof, the true scope of the invention should not be so limited since other modifications will become apparent to the skilled practitioner upon a study of the drawings, specification and the claims. For example, the inventive concept defined in the claims may also be implemented other than using the input and output module. Rather, one single module could realise the converting function according to the invention.

### 5. Further information concerning DVD-formats may be found in the following documents, the content of which are incorporated herein by reference

- DVD+ReWritable Video Format Specifications, System Description, version 1.2, April 2003, © Royal Philips Electronics
- DVD Specifications for Rewritable/Re-recordable Discs, Part 3 Video Recording, Version 1.0, September 1999, © DVD Forum
- DVD Specifications for Read-Only Discs, Part 3 Video Specifications, Version 1.1, December 1997, © DVD Forum
- DVD Specifications for Read-Only Discs, Part 2 File System Specifications, Version 1.0, August 1996, © DVD Forum
- ISO/IEC 11172-3, ISO/IEC 11172-3, ISO/IEC 13818-1, ISO/IEC 13818-2, ISO/IEC 13818-3 (MPEG-1 Video, MPEG-1 Audio, MPEG-2 Systems, MPEG-2 Video, MPEG-2 Audio)
- Digital Video Broadcasting (DVB), Specification for Service Information (SI) in DVB Systems, ETSI EN 300 468, Version 1.3.1, February 1998

## Claims

1. System for converting DVD based video recording formats among each other, comprising:
- a reader unit for reading source data organized in any DVD-source format from a DVD-source medium;
- a writer unit for writing destination data organized in any DVD-destination format on a DVD-destination medium;
- a processing unit coupled with the reader unit for receiving data from the source medium and coupled with said writer unit for supplying data to be written,
wherein said processing unit is adapted to convert DVD-source data in any DVD-source format into DVD-destination data in any DVD-destination format.

2. System of claim 1, wherein said processing unit comprises an input module and an output module, said input module being coupled with the reader unit for receiving data from the source medium, and said output module being coupled with said writer unit for supplying data to be written, wherein said input module is adapted to provide source data in at least the DVD-source format and a generic DVD-format, and said output module is adapted to get data from said input module in one of said provided DVD-formats depending on the DVD-destination format.

3. System of claim 2, wherein said input module comprises a data format analysing unit for detecting and analysing the DVD-source format.

4. System of claim 2 or 3, wherein said input module comprises a converting unit for converting said source data in said DVD-source format in said generic DVD-format upon request of said output module.

5. System of any of claims 2 to 4, wherein said output module comprises a converting unit for converting said data get from and supplied by said input module into said DVD-destination format.

6. System of any of claims 2 to 5, wherein said DVD-source and destination formats are DVD+R VR, DVD+RW VR, DVD-RW VR, DVD-RAM VR, DVD-R VR and DVD-Video.

7. System of any of claims 2 to 6, wherein said generic DVD-format contains information common to all DVD-source and destination formats.

8. System of claim 7, wherein said information comprises at least recording and chapter information.

9. System of claim 5, wherein said converting unit of said output module is adapted to get selected data being part of a further DVD-format provided by said input module.

10. System of any of claims 2 to 9, comprising a video converter unit coupled with said output module for converting video data on said source medium into a format required by said output module.

11. System of any of claims 2 to 10, comprising a data allocation unit assigned to said write unit for allocating space on said DVD-destination medium when data is not immediately available for writing.

12. System of any of claims 2 to 11, comprising a file-system driver unit assigned to said reader unit for reading data on the DVD-source medium in a file-system.

13. Method for converting any video recording source format of data stored on a DVD-source medium into any desired video recording destination format, comprising the steps of
- analysing source data on a DVD-source medium for determining the DVD-source format;
- generating destination data organized in said desired DVD-destination format by using selected source data on the basis of the result of the analysing step; and
- writing said destination data on a DVD-destination medium.

14. Method of claim 13, wherein said step of generating comprises the steps of:
- providing said source data in at least said DVD-source format and a generic DVD-format;
- getting data in one of said provided DVD-formats depending on the DVD-destination format;
- parsing said source data into said DVD-format; and
- parsing said data provided in said DVD-format into said DVD-destination format.

15. Method of claim 14, wherein said DVD-source format and said DVD-destination format is one of DVD+R VR, DVD+RW VR, DVD-RW VR, DVD-RAM VR, DVD-R VR and DVD-Video.

16. Method of claim 14 or 15, wherein said generic DVD-format is selected so that it contains only information common to all DVD-source and destination formats.

17. Method of any of claims 14 to 16, wherein said steps of analysing, providing and parsing said source data are performed by an input module and said steps of getting and parsing said data are performed by an output module.

18. Method of any of claims 14 to 17, wherein the step of getting data in one of said offered DVD-formats comprises the step of determining which of the provided DVD-formats matches best with the DVD-destination format.

19. Method of any of claims 14 to 18, wherein for elements in said DVD-destination format having no correspondence in said requested data, corresponding data is searched and get in the remaining offered DVD-formats.

20. Method of any of claims 14 to 19, comprising the step of converting a video content recorded on said source medium into a video format desired for said DVD-destination medium.

21. Method of any of claims 14 to 20, comprising the step of writing said data in said DVD-destination format on said DVD-destination medium.

22. Method of claim 21, wherein the step of writing said data is performed without using extra temporary storage.

23. Computer program product stored on a computer usable medium, for converting any video recording source format of data stored on a DVD-source medium into a desired video recording DVD-destination format, said computer program product comprising computer readable program means for carrying out a method according to any of claims 14 to 22.

24. System for converting DVD based video recording formats among each other, comprising:
- a reader unit for reading source data organized in a DVD-source format from a DVD-source medium;
- an input module coupled with the reader unit for receiving data from the source medium;
- a writer unit for writing destination data organized in a destination format on a DVD-destination medium;
- an output module coupled with said writer unit for supplying data to be written,
wherein said input module is adapted to offer source data in at least the DVD-source format and a generic DVD-format, and said output module is adapted to request data from said input module in one of said offered DVD-formats depending on the DVD-destination format.

25. Method for converting any video recording source format of data stored on a DVD-source medium into a desired video recording destination format, comprising the steps of
- analysing source data on a DVD-source medium for determining the DVD-source format;
- offering said source data in at least said DVD-source format and a generic DVD-format;
- requesting data in one of said offered DVD-formats depending on the DVD-destination format;
- parsing said source data into said requested DVD-format; and
- parsing said data provided in said requested DVD-format into said DVD-destination format.
